# EUROPEAN PATENT SPECIFICATION

(11) **EP 2 654 019 B1**
(45) Date of publication and mention of the grant of the patent: **03.01.2018**
(21) Application number: 13160920.8
(22) Date of filing: 25.03.2013
(51) Int. Cl.: G06T 7/73

(54) **Method for displaying augmented reality image and electronic device thereof**
Verfahren zum Anzeigen von erweiterten Wirklichkeitsabbildungen und elektronische Vorrichtung davon
Procédé d'affichage d'image de réalité amplifiée et son dispositif électronique

(30) Priority: 18.04.2012 KR 20120040429
(43) Date of publication of application: 23.10.2013
(73) Proprietor: Samsung Electronics Co., Ltd., Gyeonggi-do 443-742 (KR)
(72) Inventor: Cho, Kyu-Sung, Gyeonggi-do (KR); Shin, Dae-Kyu, Gyeonggi-do (KR)
(74) Representative: HGF Limited

(56) References cited:
- GB-A- 2 411 532
- PIRCHHEIM C ET AL: "Homography-based planar mapping and tracking for mobile phones", MIXED AND AUGMENTED REALITY (ISMAR), 2011 10TH IEEE INTERNATIONAL SYMPOSIUM ON, IEEE, 26 October 2011 (2011-10-26), pages 27-36, XP032104403, DOI: 10.1109/ISMAR.2011.6092367 ISBN: 978-1-4577-2183-0
- CHEOK A D ET AL: "Augmented reality camera tracking with homographies", IEEE COMPUTER GRAPHICS AND APPLICATIONS, IEEE SERVICE CENTER, NEW YORK, NY, US, vol. 22, no. 6, 1 November 2002 (2002-11-01), pages 39-45, XP011095118, ISSN: 0272-1716, DOI: 10.1109/MCG.2002.1046627

## Description

### BACKGROUND OF THE INVENTION

### 1. Field of the Invention:

The present invention relates to a feature matching method for displaying an augmented reality image and an electronic device thereof. More particularly, the present invention relates to a system and method for matching features in order to provide an augmented reality service in an electronic device.

### 2. Description of the Related Art:

Recently, with the sudden growth of electronic devices such as smart phones, tablet Personal Computers (PCs) and the like, the electronic devices enabling wireless voice call and information exchange became necessities of life. Originally, when such electronic devices were introduced, the electronic devices were simply recognized as portable terminals enabling a wireless call. However, with the development of its technology and the introduction of the wireless Internet, the portable terminal simply enabling the wireless call has evolved into a multimedia device performing functions of schedule management, gaming, remote control, image photographing and the like.

Particularly, in recent years, an electronic device providing an augmented reality service has been introduced on the market. The augmented reality service is a service of superimposing a virtual image having supplementary information on a real-world image seen by a user, and showing the superimposition result. The augmented reality service matches features of the real-world image with features of a previously stored image and provides a virtual video corresponding to the matching result to a user. However, because such a feature matching technique used for the augmented reality service can recognize only an image photographed on a target within a specific angle, it is difficult to recognize an image at a viewpoint other than the specific angle. Because of this, when the user photographs the real-world image at the viewpoint other than the specific angle, it is difficult to provide the augmented reality service in the electronic device.

Therefore, a need exists for a system and method for matching features in order to provide an augmented reality service in an electronic device.

The above information is presented as background information only to assist with an understanding of the present disclosure. No determination has been made, and no assertion is made, as to whether any of the above might be applicable as prior art with regard to the present invention.

GB2411532 A discloses a camera position determination method for determining the position and orientation of a camera which does not rely on the use of special markers.

### SUMMARY OF THE INVENTION

Aspects of the present invention are to address at least the above-mentioned problems and/or disadvantages and to provide at least the advantages described below. Accordingly, an aspect of the present invention is to provide a method and apparatus for matching features in order to provide an augmented reality service in an electronic device.

Another aspect of the present invention is to provide a method and apparatus for converting a viewpoint of an image and matching features in order to provide an augmented reality service in an electronic device.

A further aspect of the present invention is to provide a method and apparatus for estimating a 3-Dimensional (3D) posture in order to provide an augmented reality service in an electronic device.

Yet another aspect of the present invention is to provide a method and apparatus for sensing a photographing angle and matching features in an electronic device.

The above aspects are achieved by providing a method for displaying an augmented reality image and an electronic device thereof.

In accordance with an aspect of the present invention, a method for displaying an augmented reality image in an electronic device is provided. The method includes acquiring a target image of a target, extracting a plurality of features of the target image, converting a reference image of the target to generate a viewpoint conversion image by converting a viewpoint of the reference image by any one of a preset angle and a user preference angle, extracting a plurality of features of the viewpoint conversion image, comparing the target image with the viewpoint conversion image to determine matching pairs of the plurality of features of the target image and the plurality of features of the viewpoint conversion image, and displaying an augmented reality image of the viewpoint conversion image based on the determined matching pairs.

In accordance with another aspect of the present invention, an apparatus for displaying an augmented reality image in an electronic device is provided. The apparatus includes at least one processor for executing computer programs, a memory for storing data and instructions, and at least one module stored in the memory and configured to be executed by the at least one processor, wherein the at least one module comprises instructions for acquiring a target image of a target, extracting a plurality of features of the target image, converting a reference image of the target to generate a viewpoint conversion image by converting a viewpoint of the reference image by any one of a preset angle and a user preference angle, extracting a plurality of features of the viewpoint conversion image, comparing the target image and the viewpoint conversion image to determine matching pairs of the plurality of features of the target image and the plurality of features of the viewpoint conversion image and, displaying an augmented reality image of the viewpoint conversion image based on the determined matching pairs.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features, and advantages of certain exemplary embodiments of the present invention will be more apparent from the following description taken in conjunction with the accompanying drawings, in which:
FIG. 1 is a diagram illustrating a construction of a system providing an augmented reality service according to an exemplary embodiment of the present invention;
FIG. 2 is a block diagram illustrating a construction of a 1st electronic device for converting a viewpoint of an image according to an exemplary embodiment of the present invention;
FIG. 3 is a block diagram illustrating a construction of a 2nd electronic device for providing an augmented reality service according to an exemplary embodiment of the present invention;
FIG. 4A is a flowchart illustrating a procedure of providing an augmented reality service using a viewpoint conversion image in a 2nd electronic device according to an exemplary embodiment of the present invention;
FIG. 4B is a diagram illustrating an apparatus for performing a procedure of providing an augmented reality service using a viewpoint conversion image in a 2nd electronic device according to an exemplary embodiment of the present invention;
FIG. 5A is a flowchart illustrating a procedure of converting a viewpoint of an image for providing an augmented reality service in a 1st electronic device according to a first exemplary embodiment of the present invention;
FIG. 5B is a flowchart illustrating a procedure of providing an augmented reality service using a viewpoint conversion image in a 2nd electronic device according to a first exemplary embodiment of the present invention;
FIG. 6A is a flowchart illustrating a procedure of converting a viewpoint of an image for providing an augmented reality service in a 1st electronic device according to a second exemplary embodiment of the present invention;
FIG. 6B is a flowchart illustrating a procedure of providing an augmented reality service using a viewpoint conversion image in a 2nd electronic device according to a second exemplary embodiment of the present invention;
FIG. 7 is a flowchart illustrating a procedure of recognizing an angle of a 2nd electronic device and providing an augmented reality service in the 2nd electronic device according to a third exemplary embodiment of the present invention;
FIG. 8A is a flowchart illustrating a procedure of acquiring a viewpoint conversion image by angle in a 1 st electronic device according to a fourth exemplary embodiment of the present invention;
FIG. 8B is a flowchart illustrating a procedure of providing an augmented reality service on the basis of a viewpoint conversion image by angle in a 2nd electronic device according to a fourth exemplary embodiment of the present invention;
FIG. 9 is a diagram illustrating a method for presenting augmented reality using a viewpoint conversion image in a 2nd electronic device according to an exemplary embodiment of the present invention; and
FIGs. 10A and 10B are diagrams illustrating a reference image and a viewpoint conversion image, respectively, according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the following description, an electronic device includes a mobile communication terminal comprised of at least one DataBase (DB), a smart phone, a tablet Personal Computer (PC), a digital camera, MPEG Audio Layer-3 (MP3) player, a navigator, a laptop computer, a netbook, a computer, a television, a refrigerator, an air conditioner and the like.

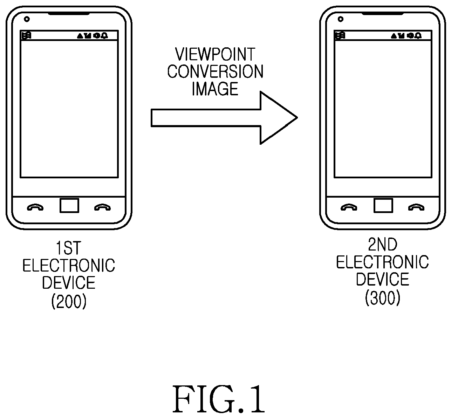

FIG. 1 illustrates a construction of a system providing an augmented reality service according to an exemplary embodiment of the present invention.

Referring to FIG. 1, a 1st electronic device 200 receives and stores a front image of a target (i.e., a reference image of the target). According to exemplary embodiments of the present invention, the 1st electronic device 200 converts a viewpoint of the reference image by user preference angle or preset angle to generate a viewpoint conversion image, and stores the generated viewpoint conversion image. Here, the 1st electronic device 200 may match features of the reference image with features of the viewpoint conversion image and store the matching relationship between the features of the reference image and the features of the viewpoint conversion image. Further, the 1st electronic device 200 distinguishes and stores videos for representing corresponding augmented reality and augmented reality related information by viewpoint conversion image or by reference image. The 1st electronic device 200 can configure a DataBase (DB) including the viewpoint conversion image and directly transmit the DB to a 2nd electronic device 300 or upload the DB to a specific server. In an exemplary embodiment, the DB including the viewpoint conversion image can include the reference image corresponding to the viewpoint conversion image, the features of the reference image, the features of the viewpoint conversion image, the matching relationship between the features of the reference image and the features of the viewpoint conversion image, the corresponding augmented reality videos, and the augmented reality related information. According to exemplary embodiments of the present invention, the 1^{st} electronic device 200 may transmit the data associated with the viewpoint conversion image to the 2nd electronic device 300 in various file formats and structures (e.g., a DB is merely an example of such a format and structure).

The 2nd electronic device 300 can acquire a DB including a viewpoint conversion image. In an exemplary embodiment of the present invention, the 2nd electronic device 300 may directly receive the DB including the viewpoint conversion image from the 1st electronic device 200, or may receive the DB including the viewpoint conversion image from the specific server through a Web. When an augmented reality service provision event occurs, the 2nd electronic device 300 compares a viewpoint conversion image with a target image acquired by a user and tracks a target, thereby displaying an augmented reality video of the target on a screen.

According to exemplary embodiments of the present invention, a description is made in which the 1 st electronic device 200 and the 2nd electronic device 300 are different devices. However, the 1st electronic device 200 and the 2nd electronic device 300 may be the same device according to a design scheme.

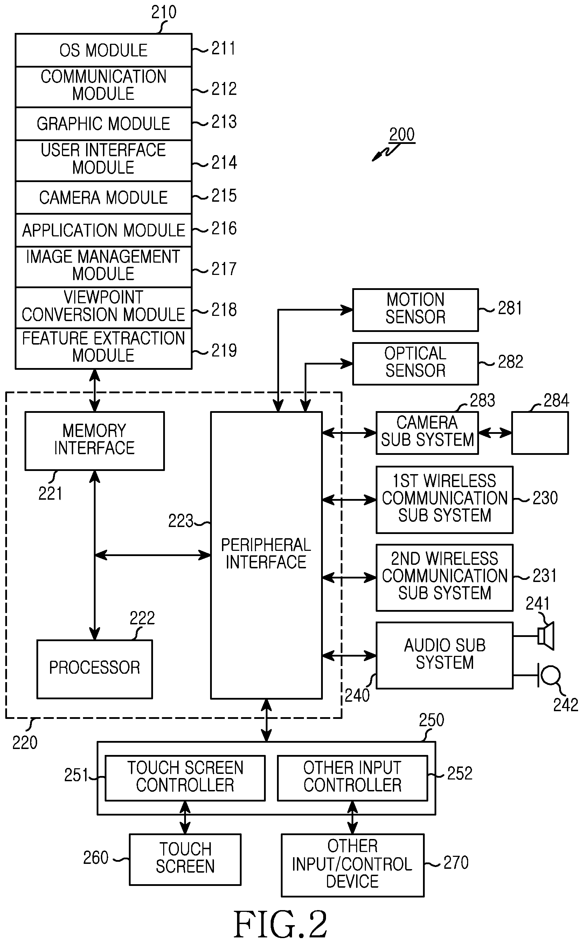

FIG. 2 illustrates a construction of a 1 st electronic device for converting a viewpoint of an image according to an exemplary embodiment of the present invention.

Referring to FIG. 2, the 1st electronic device 200 includes a memory 210, a processor unit 220, a 1st wireless communication sub system 230, a 2nd wireless communication sub system 231, an audio sub system 240, a speaker 241, a microphone 242, an Input/Output (I/O) sub system 250, a touch screen 260, other input or control device 270, a motion sensor 281, an optical sensor 282, and a camera sub system 283.

The memory 210 can be composed of a plurality of memories. For example, the memory 210 may comprise a plurality of storage portions or segments on which data may be stored. The memory 210 may comprise a plurality of distinct storage units.

The processor unit 220 can include a memory interface 221, one or more processors 222, and a peripheral interface 223. According to cases, the whole processor unit 220 is also called a processor. The memory interface 221, the one or more processors 222, and/or the peripheral interface 223 can be separate constituent elements or can be integrated into one or more integrated circuits.

The processor 222 executes various software programs and performs various functions for the 1 st electronic device 200, and also performs processing and control for voice communication and data communication. Also, in addition to this general function, the processor 222 executes a specific software module (e.g., instruction set) stored in the memory 210 and performs specific various functions corresponding to the software module.

The peripheral interface 223 connects the I/O sub system 250 of the 1st electronic device 200 and various peripheral devices thereof to the processor 222 and to the memory 210 through the memory interface 221.

Various constituent elements of the source 1 st electronic device 200 can be coupled by one or more communication buses (not denoted by reference numerals) or stream lines (not denoted by reference numerals).

The 1 st and 2nd wireless communication sub systems 230 and 231 can include a Radio Frequency (RF) receiver and transceiver and/or an optical (e.g., infrared) receiver and transceiver. The 1 st and 2nd communication sub systems 230 and 231 can be distinguished according to a communication network supported by the 1st electronic device 200. For example, the 1st electronic device 200 can include a wireless communication sub system supporting any one of a Global System for Mobile Communication (GSM) network, an Enhanced Data GSM Environment (EDGE) network, a Code Division Multiple Access (CDMA) network, a Wireless - Code Division Multiple Access (W-CDMA) network, a Long Term Evolution (LTE) network, an Orthogonal Frequency Division Multiple Access (OFDMA) network, a Wireless Fidelity (Wi-Fi) network, a Wireless interoperability for Microwave Access (WiMAX) network, a Bluetooth network, and/or the like. The wireless communication sub system according to the exemplary embodiment of the present invention is not limited to a wireless communication sub system supporting the aforementioned networks and may be a wireless communication sub system supporting other networks. However, at least one of the 1st wireless communication sub system 230 and the 2nd wireless communication sub system 231 can support a Wireless Local Area Network (WLAN) according to an exemplary embodiment of the present invention. For example, one of the 1st wireless communication sub system 230 and the 2nd wireless communication sub system 231 can operate through the Wi-Fi network. The 1st wireless communication sub system 230 and the 2nd wireless communication sub system 231 may be constructed as one wireless communication sub system.

According to an exemplary embodiment of the present invention, the audio sub system 240 is coupled to the speaker 241 and the microphone 242, and performs a function of input and output of an audio stream such as voice recognition, voice replication, digital recording, and phone function. For example, the audio sub system 240 performs a function for outputting an audio signal through the speaker 241, and receiving an input of an audio signal of a user through the microphone 242. The audio sub system 240 receives a data stream through the peripheral interface 223 of the processor unit 220, converts the received data stream into an electric stream, and provides the converted electric stream to the speaker 241. The audio sub system 240 receives a converted electric stream from the microphone 242, converts the received electric stream into an audio data stream, and transmits the converted audio data stream to the peripheral interface 223. The audio sub system 240 can include a detachable earphone, headphone, headset, and/or the like. The speaker 241 converts the electric stream received from the audio sub system 240 into a sound wave audible by a person and outputs the converted sound wave. The microphone 242 converts a sound wave forwarded from the person or other sound sources, into an electric stream.

The I/O sub system 250 can include a touch screen controller 251 and/or other input controller 252. The touch screen controller 251 can be coupled to the touch screen 260. The touch screen 260 and the touch screen controller 251 can detect a touch and motion or an interruption thereof through not only capacitive, resistive, infrared and surface acoustic wave technologies for determining one or more touches with the touch screen 260 but also an arbitrary multi touch sensing technology including other proximity sensor arrays or other elements. The other input controller 252 can be coupled to the other input/control device 270. The other input/control device 270 can include one or more up/down buttons for volume adjustment. Also, the button can be a push button, a rocker button, or the like. The other input/control device 270 can be a rocker switch, a thumb-wheel, a dial, a stick, a pointer device such as a stylus, and the like.

The touch screen 260 provides an input/output interface between the 1 st electronic device 200 and a user. For example, the touch screen 260 provides an interface for user's touch input/output. In detail, the touch screen 260 is a medium for forwarding a user's touch input to the 1 st electronic device 200 and showing an output of the 1st electronic device 200 to the user. Also, the touch screen 260 provides a visual output to the user. This visual output can be presented in a form of a text, a graphic, a video, and a combination thereof. The touch screen 260 can use various display technologies. For example, the touch screen 260 can use a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), a Flexible LED (FLED), and/or the like. According to exemplary embodiments of the present invention, the touch screen 260 is not limited to touch screens using these display technologies.

According to exemplary embodiments of the present invention, the touch screen 260 can display various photographing images received from a camera sensor 284.

The memory 210 can be coupled to the memory interface 221. The memory 210 can include one or more magnetic disk storage devices, high-speed random access memories and/or non-volatile memories, and/or one or more optical storage devices and/or flash memories (e.g., Not AND (NAND) memories and Not OR (NOR) memories).

The memory 210 stores software. The software constituent element includes an Operating System (OS) module 211, a communication module 212, a graphic module 213, a user interface module 214, a camera module 215, one or more application modules 216, an image management module 217, a viewpoint conversion module 218, a feature extraction module 219, and the like. Also, because the module, which is a software constituent element, can be also expressed as a set of instructions, the module is also expressed as an instruction set. The module may also be expressed as a program.

The memory 210 can store one or more modules including instructions of performing an exemplary embodiment of the present invention.

The OS software 211 (e.g., a built-in OS such as WINDOWS, LINUX, Darwin, RTXC, UNIX, OS X, or VxWorks) includes various software constituent elements controlling general system operation. For instance, control of the general system operation means memory management and control, storage hardware (e.g., device) control and management, power control and management, and the like. The OS software 211 performs a function of making smooth communication between various hardware (e.g., devices) and software constituent elements (e.g., modules).

The communication module 212 may communicate with other electronic device such as a personal computer, a server, a portable terminal, and the like, through the 1st wireless communication sub system 230 or the 2nd wireless communication sub system 231.

The graphic module 213 includes various software constituent elements for displaying a graphic on the touch screen 260. The graphic is a meaning including a text, a web page, an icon, a digital image, a video, an animation, and the like.

The user interface module 214 includes various software constituent elements associated with a user interface. The user interface module 214 includes information about how a state of the user interface is changed, in which conditions the change of the state of the user interface is carried out, and the like. The user interface module 214 receives an input for searching a location through the touch screen 260 or the other input/control device 270.

The camera module 215 includes a camera-related software constituent element enabling camera-related processes and functions.

According to exemplary embodiments of the present invention, the camera module 215 receives a front image (hereinafter, referred to as a 'reference image') of a target from the camera sensor 284, and transmits the received reference image to the image management module 217. Here, the target, which is a subject for providing an augmented reality service, can include a photograph, a book, a document, a variety of objects, a building, and the like.

The application module 216 includes an application such as a browser, an electronic mail (e-mail), an instant message, word processing, keyboard emulation, an address book, a touch list, a widget, Digital Right Management (DRM), voice recognition, voice replication, a location determining function, a location based service, and the like.

The image management module 217 receives a reference image from the camera module 215 and stores and manages the received reference image. Also, the image management module 217 receives a viewpoint conversion image from the viewpoint conversion module 218 and stores the received viewpoint conversion image. Also, the image management module 217 receives information about features of each viewpoint conversion image from the feature extraction module 219 and stores the received feature information. According to an exemplary embodiment of the present invention, the image management module 217 can match features of the viewpoint conversion image with features of the reference image and store the matching result. Additionally, the image management module 217 distinguishes and stores videos for presenting corresponding augmented reality and augmented reality related information, by viewpoint conversion image or by reference image. Here, the augmented reality related information represents various information, which are necessary for displaying the videos for representing the augmented reality on a screen. Below, for the sake of description convenience, the video for representing the augmented reality is called an augmented reality video. The augmented reality video can be a moving picture or a still picture. For example, the image management module 217 can store a 1st augmented reality video corresponding to a 1st viewpoint conversion image and augmented reality related information, and store a 2nd augmented reality video corresponding to a 2nd viewpoint conversion image and augmented reality related information.

Further, the image management module 217 can receive a viewpoint conversion image by angle, which is previously set for each reference image, from the viewpoint conversion module 218, and store and manage the received viewpoint conversion image. For example, the image management module 217 can store and manage a 1 st viewpoint conversion image converting a viewpoint of a 1 st reference image into 10 degrees, and a 2nd viewpoint conversion image converting the viewpoint of the 1st reference image into 20 degrees. According to an exemplary embodiment of the present invention, the image management module 217 can be comprised of at least one DB, and can be provided to an external electronic device (e.g., a 2nd electronic device).

The viewpoint conversion module 218 receives a photographing angle between the 1st electronic device 200 and a target from the motion sensor 281, analyzes the received photographing angle, and determines a photographing angle that a user most prefers. According to an exemplary embodiment of the present invention, the user preference photographing angle can be directly set and changed by the user. After that, the viewpoint conversion module 218 converts a viewpoint of a reference image received from the camera sensor 284 or the image management module 217 as much as the user preference photographing angle, and transmits a viewpoint conversion image to the image management module 217. For example, if it is determined that the user prefers 60 degrees as the photographing angle, the viewpoint conversion module 218 converts the viewpoint of the reference image as much as 60 degrees and then, transmits a viewpoint conversion image to the image management module 217. The viewpoint conversion module 218 can convert the viewpoint of the reference image as much as a desired angle using homography relationship.

The viewpoint conversion module 218 may convert a viewpoint of a reference image by preset angle or may convert the viewpoint of the reference image by angle dependent on user control. For example, the viewpoint conversion module 218 converts the viewpoint of the reference image into 10 degrees, 20 degrees, 30 degrees, 40 degrees, 50 degrees, 60 degrees, 70 degrees, 80 degrees, and 90 degrees, respectively, and transmits each viewpoint conversion image to the image management module 217.

The feature extraction module 219 receives a viewpoint conversion image from the image management module 217, and extracts features of the received viewpoint conversion image. The feature extraction module 219 can extract features of an image by means of a scheme such as a Scale Invariant Feature Transform (SIFT) scheme of extracting features invariant against a scale and rotation of a video and a Speeded Up Robust Feature (SURF) scheme of taking an environment change of a scale, lighting, a viewpoint, and the like into consideration and finding features invariant against the environment change from various videos.

Also, the feature extraction module 219 receives a reference image and a viewpoint conversion image from the image management module 217 according to a design scheme, extracts features of each of the reference image and the viewpoint conversion image, matches the extracted features of the reference image and the viewpoint conversion image, and transmits the matching relationship between the features of the reference image and the features of the viewpoint conversion image to the image management module 217. For example, the feature extraction module 219 extracts features of each of the reference image and the viewpoint conversion image, matches a 1st feature of the reference image with a 1st feature of the viewpoint conversion image corresponding to this, matches a 2nd feature of the reference image with a 2nd feature of the viewpoint conversion image corresponding to this, and transmits the matching relationship therebetween to the image management module 217.

The memory 210 can include additional modules (instructions) other than the modules mentioned above. Further, the memory 210 may not use some modules (instructions) according to need.

Also, various functions of the 1st electronic device 200 according to exemplary embodiments of the present invention, which have been mentioned above and are to be mentioned below, can be executed by hardware including one or more stream processing and/or Application Specific Integrated Circuits (ASICs), and/or software, and/or a combination of them.

The motion sensor 281 and the optical sensor 282 can be coupled to the peripheral interface 223 and perform various functions. For example, if the motion sensor 281 and the optical sensor 282 are coupled to the peripheral interface 223, the motion sensor 281 and the optical sensor 282 can sense a motion of the 1st electronic device 200 and light from the external, respectively. Besides this, other sensors such as a positioning sensor, a temperature sensor, a biological sensor, and the like can be connected to the peripheral interface 223 and perform related functions. According to exemplary embodiments of the present invention, the motion sensor 281 measures an angle between the 1st electronic device 200 photographing a target and the target at a time the 1 st electronic device 200 photographs the target for the sake of augmented reality service provision.

The camera sub system 283 can be coupled with the camera sensor 284 and perform a camera function such as photograph and video recording. Also, the camera sub system 283 transmits various photographing images received from the camera sensor 284, to the touch screen 260. According to exemplary embodiments of the present invention, the camera sensor 284 photographs a reference image of a target, and transmits the reference image to the camera module 215.

According to an exemplary embodiment of the present invention, the aforementioned functions carried out in the image management module 217, the viewpoint conversion module 218, and the feature extraction module 219 may be carried out directly in the processor 222.

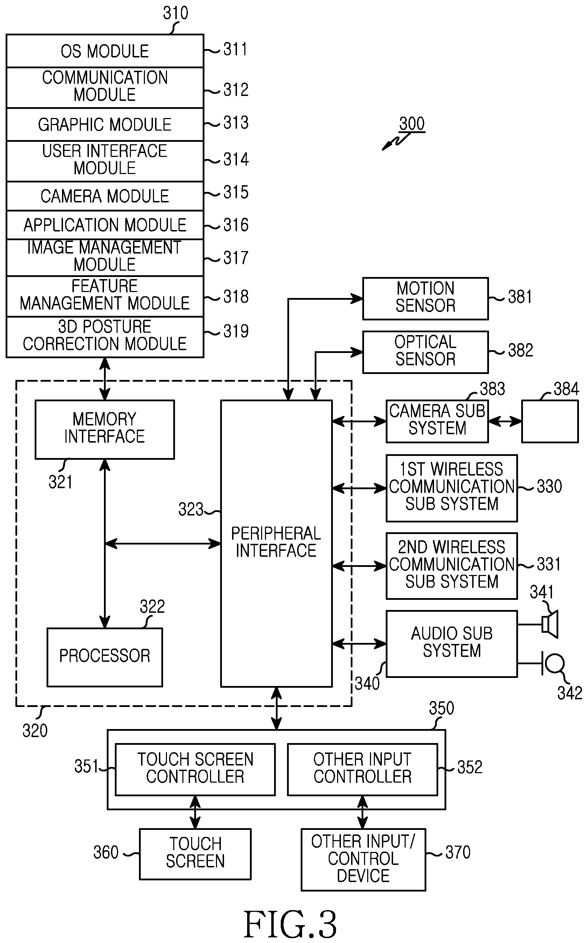

FIG. 3 illustrates a construction of a 2nd electronic device for providing an augmented reality service according to an exemplary embodiment of the present invention.

The 2nd electronic device 300 includes a memory 310, a processor unit 320, a 1st wireless communication sub system 330, a 2nd wireless communication sub system 331, an audio sub system 340, a speaker 341, a microphone 342, an I/O sub system 350, a touch screen 360, other input or control device 370, a motion sensor 381, an optical sensor 382, and a camera sub system 383.

The memory 310 can be composed of a plurality of memories. For example, the memory 310 may comprise a plurality of storage portions or segments on which data may be stored. The memory 310 may comprise a plurality of distinct storage units.

The processor unit 320 can include a memory interface 321, one or more processors 322, and a peripheral interface 323. According to cases, the whole processor unit 320 is also called a processor. The memory interface 321, the one or more processors 322, and/or the peripheral interface 323 can be separate constituent elements or can be integrated into one or more integrated circuits.

The processor 322 executes various software programs and performs various functions for the 2nd electronic device 300, and also performs processing and control for voice communication and data communication. Also, in addition to this general function, the processor 322 executes a specific software module (e.g., instruction set) stored in the memory 310 and performs various functions corresponding to the software module.

The peripheral interface 323 connects the I/O sub system 350 of the 2nd electronic device 300 and various peripheral devices thereof to the processor 322 and to the memory 310 through the memory interface 321.

Various constituent elements of the source 2nd electronic device 300 can be coupled by one or more communication buses (not denoted by reference numerals) or stream lines (not denoted by reference numerals).

The 1 st and 2nd wireless communication sub systems 330 and 331 can include an RF receiver and transceiver and/or an optical (e.g., infrared) receiver and transceiver. The 1st and 2nd communication sub systems 330 and 331 can be distinguished according to a communication network supported by the 2nd electronic device 300. For example, the 2nd electronic device 300 can include a wireless communication sub system supporting any one of a GSM network, an EDGE network, a CDMA network, a W-CDMA network, an LTE network, an OFDMA network, a Wi-Fi network, a WiMAX network, a Bluetooth network, and/or the like. The wireless communication sub system according to the exemplary embodiment of the present invention is not limited to a wireless communication sub system supporting the aforementioned networks and may be a wireless communication sub system supporting other networks. However, at least one of the 1st wireless communication sub system 330 and the 2nd wireless communication sub system 331 can support a WLAN according to an exemplary embodiment of the present invention. For example, one of the 1st wireless communication sub system 330 and the 2nd wireless communication sub system 331 can operate through the Wi-Fi network. The 1st wireless communication sub system 330 and the 2nd wireless communication sub system 331 may be constructed as one wireless communication sub system.

The audio sub system 340 is coupled to the speaker 341 and the microphone 342, and performs a function of input and output of an audio stream such as voice recognition, voice replication, digital recording, and phone function. For example, the audio sub system 340 performs a function for outputting an audio signal through the speaker 341, and receiving an input of an audio signal of a user through the microphone 342. The audio sub system 340 receives a data stream through the peripheral interface 323 of the processor unit 320, converts the received data stream into an electric stream, and provides the converted electric stream to the speaker 341. The audio sub system 340 receives a converted electric stream from the microphone 342, converts the received electric stream into an audio data stream, and transmits the converted audio data stream to the peripheral interface 323. The audio sub system 340 can include a detachable earphone, headphone, headset, and/or the like. The speaker 341 converts the electric stream received from the audio sub system 340 into a sound wave audible by a person and outputs the converted sound wave. The microphone 342 converts a sound wave forwarded from the person or other sound sources, into an electric stream.

The I/O sub system 350 can include a touch screen controller 351 and/or other input controller 352. The touch screen controller 351 can be coupled to the touch screen 360. The touch screen 360 and the touch screen controller 351 can detect a touch and motion or an interruption thereof through not only capacitive, resistive, infrared and surface acoustic wave technologies for determining one or more touches with the touch screen 360 but also an arbitrary multi touch sensing technology including other proximity sensor arrays or other elements. The other input controller 352 can be coupled to the other input/control device 370. The other input/control device 370 can include one or more up/down buttons for volume adjustment. Also, the button can be a push button, a rocker button, or the like. The other input/control device 370 can be a rocker switch, a thumb-wheel, a dial, a stick, a pointer device such as a stylus, and the like.

The touch screen 360 provides an input/output interface between the 2nd electronic device 300 and a user. For example, the touch screen 360 provides an interface for user's touch input/output. In detail, the touch screen 360 is a medium for forwarding a user's touch input to the 2nd electronic device 300 and showing an output of the 2nd electronic device 300 to the user. Also, the touch screen 360 provides a visual output to the user. This visual output can be presented in a form of a text, a graphic, a video, and a combination thereof. The touch screen 360 can use various display technologies. For example, the touch screen 360 can use an LCD, an LED, an LPD, an OLED, an AMOLED, a FLED, and/or the like. According to exemplary embodiments of the present invention, the touch screen 360 is not limited to touch screens using these display technologies.

According to exemplary embodiments of the present invention, the touch screen 360 can display various photographing images received from a camera sensor 384. Also, the touch screen 360 displays an augmented reality video according to the control of the graphic module 313, and displays an image acquired by the camera sensor 384. In an exemplary embodiment, the touch screen 360 can superimpose an augmented reality video on the acquired image and display the superimposition result.

The memory 310 can be coupled to the memory interface 321. The memory 310 can include one or more magnetic disk storage devices, high-speed random access memories and/or non-volatile memories, and/or one or more optical storage devices and/or flash memories (for example, NAND memories and NOR memories).

The memory 310 stores software. The software constituent element includes an OS module 311, a communication module 312, a graphic module 313, a user interface module 314, a camera module 315, one or more application modules 316, an image management module 317, a feature management module 318, a 3-Dimensional (3D) posture correction module 319, and the like. Also, because the module, which is a software constituent element, can be also expressed as a set of instructions, the module is also expressed as an instruction set. The module is also expressed as a program.

The memory 310 can store one or more modules including instructions of performing an exemplary embodiment of the present invention.

The OS software 311 (for example, a built-in OS such as WINDOWS,

LINUX, Darwin, RTXC, UNIX, OS X, or VxWorks) includes various software constituent elements controlling general system operation. For instance, control of the general system operation means memory management and control, storage hardware (device) control and management, power control and management, and the like. The OS software 311 performs a function of making smooth communication between various hardware (devices) and software constituent elements (modules).

The communication module 312 can make possible communication with other electronic device such as a personal computer, a server, a portable terminal and the like, through the 1 st wireless communication sub system 330 or the 2nd wireless communication sub system 331.

The graphic module 313 includes various software constituent elements for displaying a graphic on the touch screen 360. The graphic is a meaning including a text, a web page, an icon, a digital image, a video, an animation, and the like. According to exemplary embodiments of the present invention, the graphic module 313 includes a software constituent element for displaying an image acquired from the camera sensor 384 on the touch screen 360. Also, the graphic module 313 includes a software constituent element for receiving an augmented reality video and related information from the image management module 317, receiving corrected 3D posture information from the 3D posture correction module 319, and displaying the augmented reality video on the touch screen 360 using the corrected 3D posture information and the related information.

The user interface module 314 includes various software constituent elements associated with a user interface. The user interface module 314 includes information about how a state of the user interface is changed, in which conditions the change of the state of the user interface is carried out, and the like. The user interface module 314 receives an input for searching a location through the touch screen 360 or the other input/control device 370.

The camera module 315 includes a camera-related software constituent element enabling camera-related processes and functions.

According to exemplary embodiments of the present invention, the camera module 315 acquires an image including a subject (or a target) for providing an augmented reality service by user control from the camera sensor 384, and transmits the acquired image to the graphic module 313 and the feature management module 318.

The application module 316 includes an application such as a browser, an e-mail, an instant message, word processing, keyboard emulation, an address book, a touch list, a widget, DRM, voice recognition, voice replication, a location determining function, a location based service, and the like.

The image management module 317 stores and manages a reference image of each of a plurality of targets and a viewpoint conversion image thereof, and stores feature information about each image. Further, the image management module 317 distinguishes and stores videos for representing augmented reality and related information by viewpoint conversion image or by reference image. For example, the image management module 317 can store a 1 st augmented reality video corresponding to a 1st viewpoint conversion image and augmented reality related information, and store a 2nd augmented reality video corresponding to a 2nd viewpoint conversion image and augmented reality related information.

The image management module 317 transmits a reference image or a viewpoint conversion image to the feature management module 318. Also, when a specific viewpoint conversion image is selected by the feature management module 319, the image management module 317 transmits an augmented reality video corresponding to the selected viewpoint conversion image and augmented reality related information to the graphic module 313. Here, the image management module 317 can be updated by an external electronic device.

The feature management module 318 receives an acquired image from the camera sensor 384 and extracts features of the acquired image. According to an exemplary embodiment of the present invention, the feature management module 318 can extract features of an image by means of a scheme such as a SIFT scheme of extracting features invariant against a scale and rotation of a video and a SURF scheme of taking an environment change of a scale, lighting, a viewpoint, and the like into consideration and finding features invariant against the environment change from various videos.

The feature management module 318 determines whether a viewpoint conversion image having features consistent with features of an acquired image exists among viewpoint conversion images previously stored in the image management module 317 using the features extracted from the acquired image. If the viewpoint conversion image having the features consistent with the features of the acquired image exists among the viewpoint conversion images previously stored in the image management module 317, the feature management module 318 selects the corresponding viewpoint conversion image, and determines an augmented reality video corresponding to the selected viewpoint conversion image. Also, the feature management module 318 transmits matching information between the features of the acquired image and features of the selected viewpoint conversion image, to the 3D posture correction module 319.

The feature management module 318 can receive a measured photographing angle of the 2nd electronic device 300 from the motion sensor 381 and determine whether a viewpoint conversion image having features consistent with features of an acquired image exists among viewpoint conversion images corresponding to the received photographing angle.

The 3D posture correction module 319 receives matching information between features of a selected viewpoint conversion image and features of an acquired image from the feature management module 318, and estimates a 3D posture for the selected viewpoint conversion image and the acquired image using the received matching information between the features of the selected viewpoint conversion image and the features of the acquired image. For example, on the basis of the matching information between the features of the selected viewpoint conversion image and the features of the acquired image, the 3D posture correction module 319 estimates an angle (i.e., rotation) value and a distance (i.e., translation) value between the selected viewpoint conversion image and the acquired image. After that, the 3D posture correction module 319 corrects the 3D posture estimated for the selected viewpoint conversion image and the acquired image, as much as a viewpoint into which the selected viewpoint conversion image is converted, and acquires a 3D posture for a reference image and the acquired image. For example, the 3D posture correction module 319 can estimate X, Y, and Z-axis angle and distance representing a 3D posture between a selected viewpoint conversion image and an acquired image, using feature matching information between the selected viewpoint conversion image and the acquired image. According to an exemplary embodiment of the present invention, when the selected viewpoint conversion image is an image whose viewpoint is converted as much as 60 degrees compared to a reference image, the 3D posture correction module 319 can correct the estimated X, Y, and Z-axis angle and distance representing the 3D posture, as much as 60 degrees, and acquire a 3D posture between the reference image and the acquired image. After that, the 3D posture correction module 319 transmits information about the corrected 3D posture to the graphic module 313.

The memory 310 can include additional modules (instructions) other than the modules mentioned above. Or, the memory 310 may not use some modules (instructions) according to need.

Also, various functions of the 2nd electronic device 300 according to exemplary embodiments of the present invention, which have been mentioned above and are to be mentioned below, can be executed by hardware including one or more stream processing and/or ASICs, and/or software, and/or a combination thereof.

The motion sensor 381 and the optical sensor 382 can be coupled to the peripheral interface 323 and perform various functions. For example, if the motion sensor 381 and the optical sensor 382 are coupled to the peripheral interface 323, the motion sensor 381 and the optical sensor 382 can sense a motion of the 2nd electronic device 300 and light from the external, respectively. Besides this, other sensors such as a positioning sensor, a temperature sensor, a biological sensor and the like can be connected to the peripheral interface 323 and perform related functions. According to exemplary embodiments of the present invention, the motion sensor 381 measures an angle between the 2nd electronic device 300 photographing a target and the target at a time the 2nd electronic device 300 photographs the target for the sake of augmented reality service provision.

The camera sub system 383 can be coupled with the camera sensor 384 and perform a camera function such as photograph and video recording. According to exemplary embodiments of the present invention, the camera sensor 384 acquires an image of a target by user's control, and transmits the acquired image to the graphic module 313 and the feature management module 318.

According to an exemplary embodiment of the present invention, the aforementioned functions carried out in the image management module 317, the feature management module 318, and the 3D posture correction module 319 may be carried out directly in the processor 222.

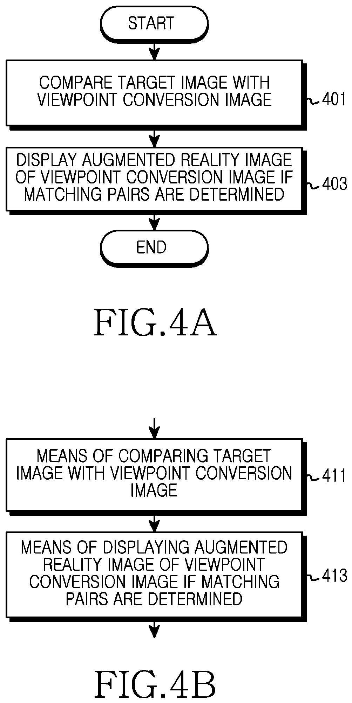

FIG. 4A illustrates a procedure of providing an augmented reality service using a viewpoint conversion image in a 2nd electronic device according to an exemplary embodiment of the present invention.

Referring to FIG. 4A, the 2nd electronic device 300 performs step 401 of comparing a target image with a viewpoint conversion image, and step 403 of displaying an augmented reality image of the viewpoint conversion image. Step 403 of displaying the augmented reality image of the viewpoint conversion image in the 2nd electronic device 300 can further include a step of measuring a difference of photographing angles of the target image and the viewpoint conversion image, which are measured in a step of determining matching pairs, correcting the measured difference of photographing angles as much as a viewpoint conversion angle of the viewpoint conversion image to determine a photographing angle of the target image, tilting the augmented reality image of the viewpoint conversion image as much as the determined photographing angle of the target image, and displaying the tilted augmented reality image. The 2nd electronic device 300 can further perform a step of determining a distance between the target image and the viewpoint conversion image, correcting the determined distance between the target image and the viewpoint conversion image as much as a distance between a reference image and the viewpoint conversion image to determine a photographing distance of the target image, adjusting a size of the augmented reality image of the viewpoint conversion image according to the determined photographing distance of the target image, and displaying the size-adjusted augmented reality image of the viewpoint conversion image. According to an exemplary embodiment of the present invention, the viewpoint conversion image can be an image converting a front image of the target into a viewpoint corresponding to any one of a preset angle and a user preference angle. Also, the target image can be an image acquired by at least any one of a camera, a memory, and an external device.

Additionally, step 401 of comparing the target image with the viewpoint conversion image in the 2nd electronic device 300 can further include a step of determining matching pairs of a plurality of features of the target image and a plurality of features of a previously stored front image, using matching pairs of a plurality of features of the viewpoint conversion image and the plurality of features of the front image. Further, step 403 of displaying the augmented reality image of the viewpoint conversion image can further include a step of measuring at least one of an angle and distance between the target image and the previously stored front image, using the determined matching pairs of the plurality of features of the target image and the plurality of features of the front image, and displaying an augmented reality image corresponding to the front image of the target using the measured angle and distance between the target image and the front image.

The 2nd electronic device 300 further performs a step of selecting a viewpoint conversion image corresponding to a photographing angle among a plurality of viewpoint conversion images, and determining the selected viewpoint conversion image as the viewpoint conversion image used for the comparison step. Here, the viewpoint conversion images can be a plurality of viewpoint conversion images whose viewpoints are converted into different angle with respect to a front image of a target. According to an exemplary embodiment of the present invention, the 2nd electronic device 300 compares the photographing angle of the 2nd electronic device 300 with a threshold angle. When the photographing angle of the 2nd electronic device 300 is greater than the threshold angle, the 2nd electronic device 300 can select a viewpoint conversion image converting into angle other than 0 degree among the plurality of viewpoint conversion images and, when the photographing angle of the 2nd electronic device 300 is less than the threshold angle, the 2nd electronic device 300 can select a viewpoint conversion image converting into 0 degree among the plurality of viewpoint conversion images.

The matching pairs according to exemplary embodiments of the present invention are determined through extracting features invariant against a scale and rotation of an image, or are determined through taking an environment change of a scale, lighting, a viewpoint, and the like into consideration and extracting features invariant against the environment change from a plurality of images.

FIG. 4B illustrates an apparatus for performing a procedure of providing an augmented reality service using a viewpoint conversion image in a 2nd electronic device according to an exemplary embodiment of the present invention.

Referring to FIG. 4B, the 2nd electronic device 300 includes a means 411 of comparing a target image with a viewpoint conversion image, and a means 413 of displaying an augmented reality image of the viewpoint conversion image. The means 413 of displaying the augmented reality image of the viewpoint conversion image in the 2nd electronic device 300 can further include a means of measuring a difference of photographing angles of the target image and the viewpoint conversion image, which are measured in a means of determining matching pairs, correcting the measured difference of photographing angles as much as a viewpoint conversion angle of the viewpoint conversion image to determine a photographing angle of the target image, tilting the augmented reality image of the viewpoint conversion image as much as the determined photographing angle of the target image, and displaying the tilted augmented reality image. The 2nd electronic device 300 can further include a means of determining a distance between the target image and the viewpoint conversion image, correcting the determined distance between the target image and the viewpoint conversion image as much as a distance between a reference image and the viewpoint conversion image to determine a photographing distance of the target image, adjusting a size of the augmented reality image of the viewpoint conversion image according to the determined photographing distance of the target image, and displaying the size-adjusted augmented reality image of the viewpoint conversion image. According to an exemplary embodiment of the present invention, the viewpoint conversion image can be an image converting a front image of the target into a viewpoint corresponding to any one of a preset angle and a user preference angle. Also, the target image can be an image acquired by at least any one of a camera, a memory, and an external device.

Additionally, the means 411 of comparing the target image with the viewpoint conversion image in the 2nd electronic device 300 can further include a means of determining matching pairs of a plurality of features of the target image and a plurality of features of a previously stored front image, using matching pairs of a plurality of features of the viewpoint conversion image and the plurality of features of the front image. Further, the means 413 of displaying the augmented reality image of the viewpoint conversion image can further include a means of measuring at least one of an angle and distance between the target image and the previously stored front image, using the determined matching pairs of the plurality of features of the target image and the plurality of features of the front image, and displaying an augmented reality image corresponding to the front image of the target using the measured angle and distance between the target image and the front image.

The 2nd electronic device 300 further includes a means of selecting a viewpoint conversion image corresponding to a photographing angle among a plurality of viewpoint conversion images, and determining the selected viewpoint conversion image as the viewpoint conversion image used for the comparison means. Here, the viewpoint conversion images can be a plurality of viewpoint conversion images whose viewpoints are converted into different angle with respect to a front image of a target. According to an exemplary embodiment of the present invention, the 2nd electronic device 300 compares the photographing angle of the 2nd electronic device 300 with a threshold angle. When the photographing angle of the 2nd electronic device 300 is greater than the threshold angle, the 2nd electronic device 300 can select a viewpoint conversion image converting into angle other than 0 degree among the plurality of viewpoint conversion images and, when the photographing angle of the 2nd electronic device 300 is less than the threshold angle, the 2nd electronic device 300 can select a viewpoint conversion image converting into 0 degree among the plurality of viewpoint conversion images.

The matching pairs according to exemplary embodiments of the present invention are determined through extracting features invariant against a scale and rotation of an image, or are determined through taking an environment change of a scale, lighting, a viewpoint, and the like into consideration and extracting features invariant against the environment change from a plurality of images.

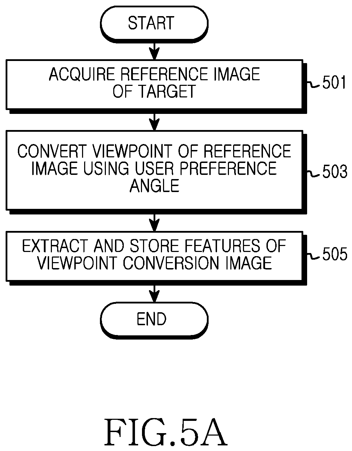

FIG. 5A is a flowchart illustrating a procedure of converting a viewpoint of an image for providing an augmented reality service in a 1 st electronic device according to a first exemplary embodiment of the present invention.

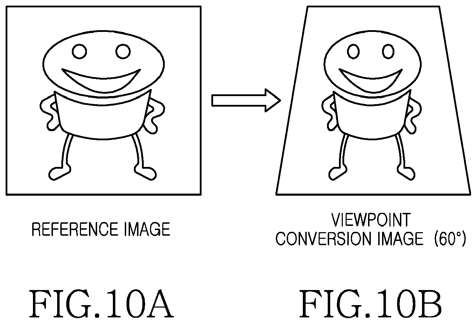

Referring to FIG. 5A, in step 501, the 1st electronic device 200 acquires a reference image of a target for providing an augmented reality service. After that, the 1st electronic device 200 proceeds to step 503 and converts a viewpoint of the reference image using a preset user preference angle and then, proceeds to step 505 and extracts features of a viewpoint conversion image. According to an exemplary embodiment, the 1st electronic device 200 can convert the viewpoint of the reference image through 2-Dimensional (2D) video conversion on the basis of homography relationship on the assumption that the target is planar. The 1st electronic device 200 stores information about the viewpoint conversion image and the features of the viewpoint conversion image in a database. For instance, as illustrated in FIG. 10, when the user preference angle is 60 degrees, the 1st electronic device 200 converts a viewpoint of a reference image (a) as much as 60 degrees, generates a viewpoint conversion image (b) whose viewpoint is converted into 60 degrees, and extracts features of the viewpoint conversion image (b). After that, the 1st electronic device 200 terminates a procedure according to an exemplary embodiment of the present invention.

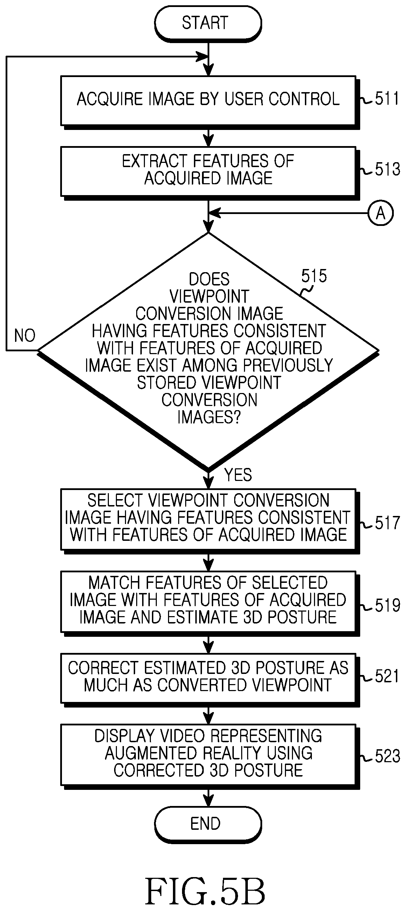

FIG. 5B illustrates a procedure of providing an augmented reality service using a viewpoint conversion image in a 2nd electronic device according to a first exemplary embodiment of the present invention. Here, it is assumed that the 2nd electronic device 300 has stored a DB generated by performing the procedure of FIG. 5A in the 1 st electronic device 200.

Referring to FIG. 5B, in step 511, the 2nd electronic device 300 acquires an image by user control, and proceeds to step 513 and extracts features of the acquired image. For example, when a user photographs a document 'A' to realize augmented reality, the 2nd electronic device 300 acquires an image of the document 'A' by user control, and extracts features from the acquired image of the document 'A'. For another example, the 2nd electronic device 300 can acquire an image from a memory or an external device and extract features of the acquired image.

After that, in step 515, the 2nd electronic device 300 determines whether a viewpoint conversion image having features consistent with the features of the acquired image exists among previously stored viewpoint conversion images. For example, when the acquired image is an image of a document 'A', the 2nd electronic device 300 determines whether a viewpoint conversion image having features consistent with features of the document 'A' exists among the previously stored viewpoint conversion images. According to an exemplary embodiment of the present invention, the viewpoint conversion image having the features consistent with the features of the document 'A' can be an image including the document 'A'.

When it is determined in step 515 that the viewpoint conversion image having the features consistent with the features of the acquired image does not exist among the previously stored viewpoint conversion images, the 2nd electronic device 300 returns to step 511 and again performs the subsequent steps.

In contrast, when it is determined in step 515 that the viewpoint conversion image having the features consistent with the features of the acquired image exists among the previously stored viewpoint conversion images, the 2nd electronic device 300 proceeds to step 517 and selects the viewpoint conversion image having the features consistent with the features of the acquired image, and then proceeds to step 519 and matches the features of the selected viewpoint conversion image and the acquired image and estimates a 3D posture. According to an exemplary embodiment of the present invention, the 2nd electronic device 300 estimates the 3D posture using feature matching information of the selected viewpoint conversion image and the acquired image. After that, the 2nd electronic device 300 proceeds to step 521 and corrects the estimated 3D posture as much as a converted viewpoint. For example, when the selected viewpoint conversion image is an image whose viewpoint is converted into 60 degrees compared to a reference image, the estimated 3D posture is a 3D posture based on the image whose viewpoint is converted into 60 degrees and therefore, the 2nd electronic device 300 can correct the estimated 3D posture as much as the viewpoint-converted 60 degrees to estimate the 3D posture on a basis of a front photograph.

Next, in step 523, the 2nd electronic device 300 displays a video representing augmented reality using the corrected 3D posture. For example, the 2nd electronic device 300 selects an augmented reality video corresponding to the selected viewpoint conversion image, renders the selected augmented reality video using the corrected 3D posture, superimposes the augmented reality video on the acquired image, and displays the superimposition result. After that, the 2nd electronic device 300 terminates the procedure according to the exemplary embodiment of the present invention.

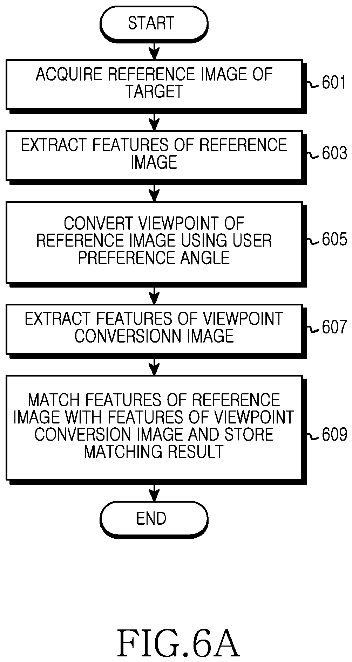

FIG. 6A illustrates a procedure of converting a viewpoint of an image for providing an augmented reality service in a 1st electronic device according to a second exemplary embodiment of the present invention.

Referring to FIG. 6A, in step 601, the 1st electronic device 200 acquires a reference image of a target for providing an augmented reality service and then, proceeds to step 603 and extracts features of the reference image, and stores the reference image and the extracted features of the reference image. After that, in step 605, the 1st electronic device 200 converts a viewpoint of the reference image using a preset user preference angle and then, proceeds to step 607 and extracts features of a viewpoint conversion image. According to an exemplary embodiment of the present invention, the 1st electronic device 200 can convert the viewpoint of the reference image through 2D video conversion on the basis of homography relationship on the assumption that the target is planar. In step 609, the 1st electronic device 200 matches the features of the reference image with the features of the viewpoint conversion image. According to an exemplary embodiment of the present invention, the 1st electronic device 200 stores the reference image and the viewpoint conversion image, and stores information about the features of each image and the matching relationship between the features of the reference image and the features of the viewpoint conversion image in a database. For instance, the 1st electronic device 200 can match a 1st feature of the reference image with a 1st feature of the viewpoint conversion image corresponding to this, match a 2nd feature of the reference image with a 2nd feature of the viewpoint conversion image corresponding to this, and store the matching relationship between the reference image and the viewpoint conversion image.

Next, the 1st electronic device 200 terminates the procedure according to the exemplary embodiment of the present invention.

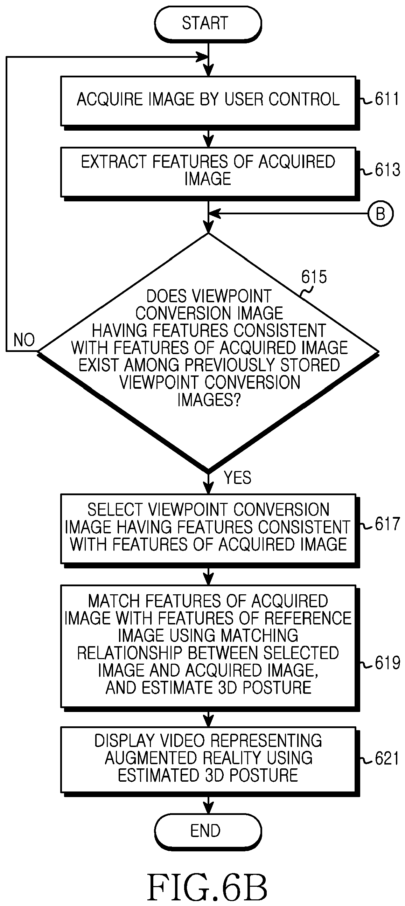

FIG. 6B illustrates a procedure of providing an augmented reality service using a viewpoint conversion image in a 2nd electronic device according to a second exemplary embodiment of the present invention. Here, it is assumed that the 2nd electronic device 300 has stored a DB generated by performing FIG. 6A in the 1st electronic device 200.

Referring to FIG. 6B, in step 611, the 2nd electronic device 300 acquires an image by user control, and proceeds to step 613 and extracts features of the acquired image. For example, when a user photographs a document 'A' to realize augmented reality, the 2nd electronic device 300 acquires an image of the document 'A' by user control, and extracts features from the acquired image of the document 'A'.

After that, in step 615, the 2nd electronic device 300 determines whether a viewpoint conversion image having features consistent with the features of the acquired image exists among previously stored viewpoint conversion images. For example, when the acquired image is an image of a document 'A', the 2nd electronic device 300 determines whether a viewpoint conversion image having features consistent with features of the document 'A' exists among the previously stored viewpoint conversion images. In an exemplary embodiment of the present invnetion, the viewpoint conversion image having the features consistent with the features of the document 'A' can be an image including the document 'A'.

When it is determined in step 615 that the viewpoint conversion image having the features consistent with the features of the acquired image does not exist among the previously stored viewpoint conversion images, the 2nd electronic device 300 returns to step 611 and again performs the subsequent steps.

In contrast, when it is determined in step 615 that the viewpoint conversion image having the features consistent with the features of the acquired image exists among the previously stored viewpoint conversion images, the 2nd electronic device 300 proceeds to step 617 and selects the viewpoint conversion image having the features consistent with the features of the acquired image. After that, the 2nd electronic device 300 proceeds to step 619 and matches the features of the acquired image with features of a reference image using the matching relationship between the selected viewpoint conversion image and the reference image and then, estimates a 3D posture on the basis of matching information between the features of the acquired image and the features of the reference image. For example, the 2nd electronic device 300 matches the features of the acquired image, which have been matched to the features of the selected viewpoint conversion image, with the features of the reference image using the matching relationship between the features of the previously stored reference image and the features of the selected viewpoint conversion image. Next, the 2nd electronic device 300 estimates a 3D posture using the matching information between the features of the acquired image and the features of the reference image that is a front image.

Next, in step 621, the 2nd electronic device 300 displays a video representing augmented reality using the estimated 3D posture. For example, the 2nd electronic device 300 selects an augmented reality video corresponding to the selected viewpoint conversion image, renders the selected augmented reality video using the estimated 3D posture, superimposes the augmented reality video on the acquired image, and displays the superimposition result. After that, the 2nd electronic device 300 terminates the procedure according to the exemplary embodiment of the present invention.

According to the exemplary embodiment of the present invention, the description has been made for a scheme of acquiring an image from a camera sensor of the 2nd electronic device 300 and extracting features of the acquired image, but the 2nd electronic device 300 may use a scheme of acquiring an image from a memory or an external device and extracting features of the acquired image.

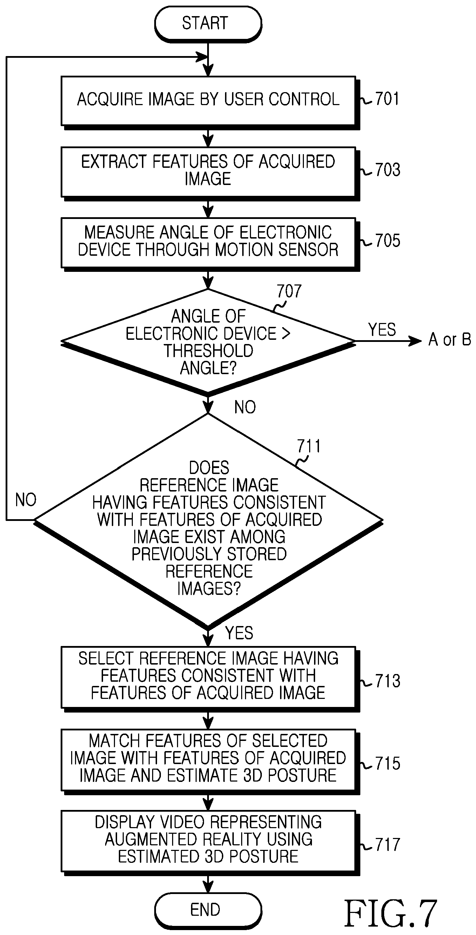

FIG. 7 illustrates a procedure of recognizing an angle of a 2nd electronic device and providing an augmented reality service in the 2nd electronic device according to a third exemplary embodiment of the present invention. Here, it is assumed that the 2nd electronic device 300 has stored a DB generated by performing the procedure of FIG. 5A or FIG. 6A in the 1st electronic device 200.

Referring to FIG. 7, in step 701, the 2nd electronic device 300 acquires an image by user control, and proceeds to step 703 and extracts features of the acquired image. After that, in step 705, the 2nd electronic device 300 measures an angle of the 2nd electronic device 300 through a motion sensor. In other words, the 2nd electronic device 300 measures a photographing angle between the 2nd electronic device 300 and a target. According to an exemplary embodiment of the present invention, according to a design scheme, the process of measuring the angle of the 2nd electronic device 300 may be executed at the same time of photographing the image in step 701.

Next, the 2nd electronic device 300 proceeds to step 707 and determines whether the angle of the 2nd electronic device 300 has a value greater than a threshold angle. Here, the threshold angle can be set and changed according to a design scheme.

When it is determined in step 707 that the angle of the 2nd electronic device 300 is greater than the threshold angle, the 2nd electronic device 300 proceeds to step 515 of FIG. 5B or step 715 of FIG. 7 and performs the subsequent steps.

In contrast, when it is determined in step 707 that the angle of the 2nd electronic device 300 is less than the threshold angle, in step 711, the 2nd electronic device 300 determines whether a reference image having features consistent with the features of the acquired image exists among previously stored reference images.

When it is determined in step 711 that the reference image having the features consistent with the features of the acquired image does not exist among the previously stored reference images, the 2nd electronic device 300 returns to step 701 and again performs the subsequent steps.

In contrast, when it is determined in step 711 that the reference image having the features consistent with the features of the acquired image exists among the previously stored reference images, the 2nd electronic device 300 proceeds to step 713 and selects the reference image having the features consistent with the features of the acquired image, and proceeds to step 715 and matches features of the selected reference image and the acquired image and estimates a 3D posture. According to an exemplary embodiment of the present invention, the 2nd electronic device 300 estimates the 3D posture using feature matching information of the selected reference image and the acquired image.

Next, in step 717, the 2nd electronic device 300 displays a video representing augmented reality using the estimated 3D posture. For example, the 2nd electronic device 300 selects an augmented reality video corresponding to the selected reference image, renders the selected augmented reality video using the estimated 3D posture, superimposes the augmented reality video on the acquired image, and displays the superimposition result. After that, the 2nd electronic device 300 terminates the procedure according to the exemplary embodiment of the present invention.

According to an exemplary embodiment of the present invention, the 2nd electronic device 300 can sense an angle of the 2nd electronic device 300 and select an image for feature matching. For example, when the angle of the 2nd electronic device 300 is greater than the threshold angle, the 2nd electronic device 300 can match features using the viewpoint conversion image and, when the angle of the 2nd electronic device 300 is less than the threshold angle, the 2nd electronic device 300 can match features using the reference image instead of using the viewpoint conversion image.

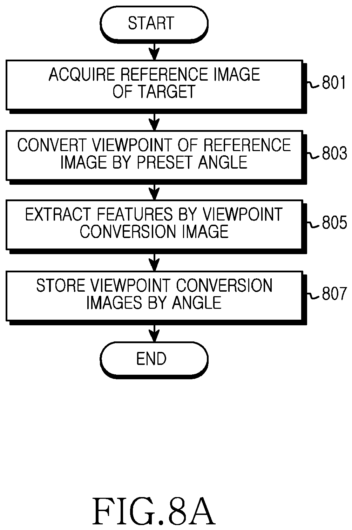

FIG. 8A illustrates a procedure of acquiring a viewpoint conversion image by angle in a 1 st electronic device according to a fourth exemplary embodiment of the present invention.

Referring to FIG. 8A, in step 801, the 1st electronic device 200 acquires a reference image of a target, and proceeds to step 803 and converts a viewpoint of the reference image by preset angle. For instance, the 1st electronic device 200 can convert a viewpoint of a 1 st reference image into 30 degrees using the 1 st reference image, convert the viewpoint of the 1 st reference image into 60 degrees, and convert the viewpoint of the 1 st reference image into 90 degrees.

Next, the 1st electronic device 200 proceeds to step 805 and extracts features of each of viewpoint conversion images. In step 807, the 1 st electronic device 200 constructs a separate DB composed of the viewpoint conversion images by angle and stores the constructed DB. For instance, the 1st electronic device 200 converts viewpoints of a 1 st reference image and a 2nd reference image into 45 degrees and 60 degrees and then, extracts features of each of viewpoint conversion images. Next, the 1st electronic device 200 constructs, stores and manages a 45-degree viewpoint conversion image of the 1st reference image and a 45-degree viewpoint conversion image of the 2nd reference image along with corresponding features of the 45-degree viewpoint conversion images, as a 1st DB, and constructs, stores and manages a 60-degree viewpoint conversion image of the 1st reference image and a 60-degree viewpoint conversion image of the 2nd reference image along with corresponding features of the 60-degree viewpoint conversion images, as a 2nd DB. Here, the 1st electronic device 200 can match the features of the reference image with the features of each viewpoint conversion image, and store the matching relationship between the features of the reference image and the features of each viewpoint conversion image according to an exemplary embodiment of the present invention.

Next, the 1st electronic device 200 terminates an algorithm according to the exemplary embodiment of the present invention.

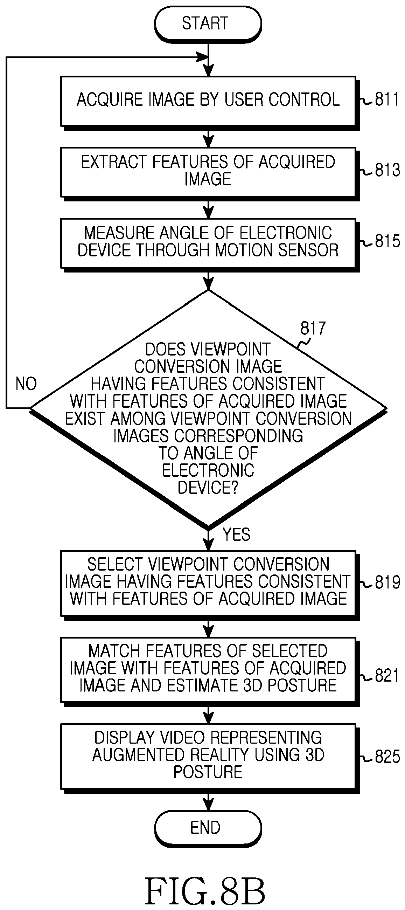

FIG. 8B illustrates a procedure of providing an augmented reality service on the basis of a viewpoint conversion image by angle in a 2nd electronic device according to a fourth exemplary embodiment of the present invention. Here, it is assumed that the 2nd electronic device 300 has stored a DB generated by performing the procedure of FIG. 8A in the 1st electronic device 200.

Referring to FIG. 8B, in step 811, the 2nd electronic device 300 acquires an image by user control, and proceeds to step 813 and extracts features of the acquired image. After that, in step 815, the 2nd electronic device 300 measures an angle of the 2nd electronic device 300 through a motion sensor. In other words, the 2nd electronic device 300 measures a photographing angle between the 2nd electronic device 300 and a target. According to an exemplary embodiment of the present invention, according to a design scheme, the process of measuring the angle of the 2nd electronic device 300 may be executed at the same time of photographing the image in step 811. Next, in step 817, the 2nd electronic device 300 determines whether a viewpoint conversion image having features consistent with the features of the acquired image exists among viewpoint conversion images corresponding to the angle of the 2nd electronic device 300. In other words, the 2nd electronic device 300 searches viewpoint conversion images whose angles are consistent with the angle of the 2nd electronic device 300 or are most similar to the angle of the 2nd electronic device 300, and determines whether a viewpoint conversion image having features consistent with the features of the acquired image exists among the searched viewpoint conversion images.

For example, when the angle of the 2nd electronic device 300 is equal to 45 degrees, the 2nd electronic device 300 determines whether a 45-degree viewpoint conversion image having features consistent with the features of the acquired image exists among viewpoint conversion images stored in a 45-degree viewpoint conversion image DB.

When it is determined in step 817 that the viewpoint conversion image having the features consistent with the features of the acquired image does not exist among the viewpoint conversion images corresponding to the angle of the 2nd electronic device 300, the 2nd electronic device 300 returns to step 811 and again performs the subsequent steps.

In contrast, when it is determined in step 817 that the viewpoint conversion image having the features consistent with the features of the acquired image exists among the viewpoint conversion images corresponding to the angle of the 2nd electronic device 300, the 2nd electronic device 300 proceeds to step 819 and selects the viewpoint conversion image having the features consistent with the features of the acquired image. Next, the 2nd electronic device 300 proceeds to step 821 and matches the features of the selected viewpoint conversion image and the acquired image and estimates a 3D posture. Then, in step 825, the 2nd electronic device 300 displays a video representing augmented reality using the 3D posture. According to an exemplary embodiment of the present invention, after estimating the 3D posture using matching information between the features of the selected viewpoint conversion image and the features of the acquired image according to an exemplary embodiment of the present invention, the 2nd electronic device 300 can correct the estimated 3D posture on the basis of the viewpoint conversion angle of the viewpoint conversion image. Also, after matching the features of the acquired image with the features of the reference image using the matching relationship of the selected viewpoint conversion image and the reference image according to another exemplary embodiment of the present invention, the 2nd electronic device 300 can estimate the 3D posture on the basis of matching information between the features of the acquired image and the features of the reference image. After that, the 2nd electronic device 300 terminates an algorithm according to the exemplary embodiment of the present invention.

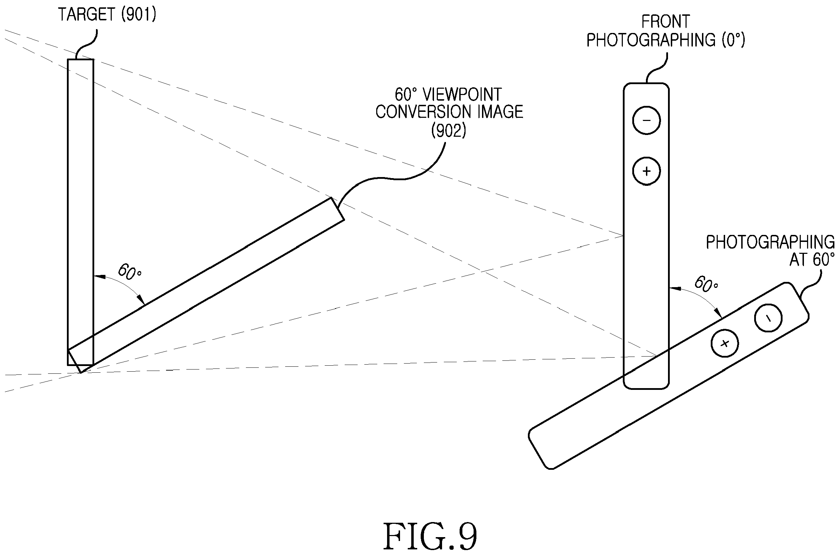

FIG. 9 illustrates a method for presenting augmented reality using a viewpoint conversion image in a 2nd electronic device according to an exemplary embodiment of the present invention.

As illustrated in FIG. 9, when the 2nd electronic device 300 photographs a target 901 from the front, a photographing angle between the 2nd electronic device 300 and the target 901 is equal to 0 degree.

When the 2nd electronic device 300 photographs the target 901 in a 60-degree tilted state, the 2nd electronic device 300 realizes augmented reality using a 60-degree viewpoint conversion image 902. According to an exemplary embodiment of the present invention, a photographing angle between the 60-degree tilted 2nd electronic device 300 and the 60-degree viewpoint conversion image 902 is equal to 0 degree.

FIGs. 10A and 10B are diagrams illustrating a reference image and a viewpoint conversion image, respectively, according to an exemplary embodiment of the present invention.

Methods according to exemplary embodiments of the present invention disclosed in claims and/or the specification of the present invention can be implemented in a form of hardware, software, or a combination of hardware and software.

In case of implementing in software, a computer readable storage medium storing one or more programs (e.g., software modules) can be provided. One or more programs stored in the computer readable storage medium are configured to be executable by one or more processors within an electronic device. One or more programs include instructions for enabling the electronic device to execute the methods according to the exemplary embodiments disclosed in the claims and/or the specification of the present invention.

These programs (e.g., software modules or software) can be stored in a Random Access Memory (RAM), a nonvolatile memory including a flash memory, a Read Only Memory (ROM), an Electrically Erasable Programmable ROM (EEPROM), a magnetic disk storage device, a Compact Disk ROM (CD-ROM), a Digital Versatile Disk (DVD) or an optical storage device of other form, and a magnetic cassette. Or, the programs can be stored in a memory configured by a combination of some or all of them. Also, each configuration memory may be included in plural.

Further, the programs can be stored in an attachable storage device accessible to an electronic device through a communication network such as the Internet, an intranet, a Local Area Network (LAN), a Wireless LAN (WLAN) or a Storage Area Network (SAN), or a communication network configured by a combination of them. This storage device can access the electronic device through an external port.

Furthermore, a separate storage device on a communication network may access a portable electronic device.

While the present invention has been shown and described with reference to certain exemplary embodiments thereof, it will be understood by those skilled in the art that various changes in form and details may be made therein without departing from the scope of the invention as defined by the appended claims.

## Claims

1. A method for displaying an augmented reality image in an electronic device (300), the method comprising:
acquiring (511,611,701,811) a target image of a target;
extracting (513,613,703,813) a plurality of features of the target image;
converting a reference image of the target (601) to generate a viewpoint conversion image by converting (503) a viewpoint of the reference image by any one of a preset angle and a user preference angle;
extracting (505) a plurality of features of the viewpoint conversion image;
comparing (401,515) the target image with the viewpoint conversion image to determine matching pairs of the plurality of features of the target image and the plurality of features of the viewpoint conversion image; and
displaying (403) an augmented reality image of the viewpoint conversion image based on the determined matching pairs.

2. The method of claim 1, wherein the displaying of the augmented reality image of the viewpoint conversion image comprises:
measuring a difference of photographing angles of the target image and the viewpoint conversion image, which are measured when determining the matching pairs;
using the measured photographing angle difference to determine a photographing angle between the target image and the reference image;
tilting the augmented reality image of the viewpoint conversion image by up to the determined photographing angle between the target image and the reference image; and
displaying the tilted augmented reality image.

3. The method of claim 2, further comprising:
determining a distance between the target image and the viewpoint conversion image; and
using the determined to determine a photographing distance between the target image and the reference image,
wherein the displaying of the augmented reality image of the viewpoint conversion image further comprises adjusting a size of the augmented reality image of the viewpoint conversion image according to the determined photographing distance between the target image and the reference image, and displaying the size-adjusted augmented reality image.

4. The method of claim 1, wherein the target image is acquired by at least any one of a camera, a memory, and an external device.

5. The method of claim 1, wherein the determining matching pairs of the plurality of features of the target image and the plurality of features of the viewpoint conversion image comprises determining matching pairs of a plurality of features of a previously stored reference image and the plurality of features of the target image, using matching pairs of the plurality of features of the reference image and the plurality of features of the viewpoint conversion image.

6. The method of claim 5, wherein the displaying of the augmented reality image of the viewpoint conversion image comprises:
measuring at least one of an angle and distance between the reference image and the target image using the determined matching pairs of the plurality of features of the reference image and the plurality of features of the target image; and
displaying an augmented reality image of the reference image of the target using the measured angle and distance between the reference image and the target image.

7. The method of claim 1, further comprising:
selecting a viewpoint conversion image corresponding to a photographing angle among a plurality of viewpoint conversion images; and
determining the selected viewpoint conversion image as the viewpoint conversion image used for the comparison.

8. The method of claim 7, wherein the viewpoint conversion images comprise a plurality of viewpoint conversion images whose viewpoints are converted into different angle with respect to a reference image of the target.

9. The method of claim 7, wherein the selecting of the viewpoint conversion image corresponding to the photographing angle among the viewpoint conversion images comprises:
comparing the photographing angle of the electronic device with a threshold angle;
when the photographing angle of the electronic device is greater than the threshold angle, selecting a viewpoint conversion image converting into angle other than 0 degree among the plurality of viewpoint conversion images; and
when the photographing angle of the electronic device is less than the threshold angle, selecting a viewpoint conversion image converting into 0 degree among the plurality of viewpoint conversion images.

10. The method of claim 1, wherein the matching pairs are determined through one of:
extracting features invariant against a scale and rotation of an image, and
taking an environment change of a scale, lighting, and a viewpoint into consideration and extracting features invariant against the environment change from a plurality of images.

11. An electronic device (300) for displaying an augmented reality image, the device comprising:
at least one processor (322) for executing computer programs;
a memory (310) for storing data and instructions; and
at least one module (311, 312, 313, 314, 315, 316, 317, 318 319) stored in the memory and configured to be executed by the at least one processor,
wherein the at least one module comprises instructions for
acquiring a target image of a target,
extracting a plurality of features of the target image,
converting a reference image of the target to generate a viewpoint conversion image by converting a viewpoint of the reference image by any one of a preset angle and a user preference angle,
extracting a plurality of features of the viewpoint conversion image,
comparing the target image and the viewpoint conversion image to determine matching pairs of the plurality of features of the target image and the plurality of features of the viewpoint conversion image and,
displaying an augmented reality image of the viewpoint conversion image based on the determined matching pairs.

12. The device of claim 11, wherein the at least one module comprises an instruction for measuring a difference of photographing angles of the target image and the viewpoint conversion image, which are measured when determining the matching pairs, for using the measured photographing angle difference to determine a photographing angle between the target image and the reference image, for tilting the augmented reality image of the viewpoint conversion image by as much as the determined photographing angle between the target image and the reference image, and for displaying the tilted augmented reality image.

13. The device of claim 12, wherein the at least one module comprises an instruction for determining a distance between the target image and the viewpoint conversion image, for using the determined distance to determine a photographing distance between the target image an the reference image, for adjusting a size of the augmented reality image of the viewpoint conversion image according to the determined photographing distance between the target image and the reference image, and for displaying the size-adjusted augmented reality image.

14. The device of claim 11, wherein the target image is acquired by at least any one of a camera, a memory, and an external device.

15. The apparatus of claim 11, wherein the apparatus arranged to implement a method of one of claims 5 to 10.

## Patentansprüche

1. Verfahren zum Anzeigen eines Bildes mit erweiterter Realität in einer elektronischen Vorrichtung (300), wobei das Verfahren Folgendes umfasst:
Erhalten (511, 611, 701, 811) eines Zielbildes eines Ziels;
Extrahieren (513, 613, 703, 813) einer Vielzahl von Merkmalen des Zielbildes;
Umwandeln eines Referenzbildes des Ziels (601), um ein Blickpunktumwandlungsbild zu erzeugen, indem ein Blickpunkt des Referenzbildes durch einen voreingestellten Winkel oder einen Benutzerpräferenzwinkel umgewandelt (503) wird;
Extrahieren (505) einer Vielzahl von Merkmalen des Blickpunktumwandlungsbildes;
Vergleichen (401, 515) des Zielbildes mit dem Blickpunktumwandlungsbild, um übereinstimmende Paare der Vielzahl von Merkmalen des Zielbildes und der Vielzahl von Merkmalen des Blickpunktumwandlungsbildes zu bestimmen; und
Anzeigen (403) eines Bildes mit erweiterter Realität des Blickpunktumwandlungsbildes basierend auf der ermittelten übereinstimmenden Paaren.

2. Verfahren nach Anspruch 1, wobei das Anzeigen des Bildes mit erweiterter Realität des Blickpunktumwandlungsbildes Folgendes umfasst:
Messen einer Differenz von Fotografierwinkeln des Zielbildes und des Blickpunktumwandlungsbildes, die bei der Bestimmung der übereinstimmenden Paare gemessen werden;
Verwenden der gemessenen Fotografierwinkeldifferenz, um einen Fotografierwinkel zwischen dem Zielbild und dem Referenzbild zu bestimmen;
Neigen des Bildes mit erweiterter Realität des Blickpunktumwandlungsbildes bis zum ermittelten Fotografierwinkel zwischen dem Zielbild und dem Referenzbild; und
Anzeigen des geneigten Bildes mit erweiterter Realität.

3. Verfahren nach Anspruch 2, das ferner Folgendes umfasst:
Bestimmen eines Abstands zwischen dem Zielbild und dem Blickpunktumwandlungsbild; und
Verwenden der Bestimmung, um einen Fotografierabstand zwischen dem Zielbild und dem Referenzbild zu bestimmen,
wobei das Anzeigen des Bildes mit erweiterter Realität des Blickpunktumwandlungsbildes ferner Folgendes umfasst: Einstellen einer Größe des Bildes mit erweiterter Realität des Blickpunktumwandlungsbildes gemäß dem ermittelten Fotografierabstand zwischen dem Zielbild und dem Referenzbild, und Anzeigen des in der Größe angepassten Bildes mit erweiterter Realität.

4. Verfahren nach Anspruch 1, wobei das Zielbild von mindestens einer Kamera, einem Speicher oder einer externen Vorrichtung erfasst wird.

5. Verfahren nach Anspruch 1, wobei das Bestimmen von übereinstimmenden Paaren der Vielzahl von Merkmalen des Zielbildes und der Vielzahl von Merkmalen des Blickpunktumwandlungsbildes Folgendes umfasst: Bestimmen von übereinstimmenden Paaren einer Vielzahl von Merkmalen eines zuvor gespeicherten Referenzbildes und der Vielzahl von Merkmalen des Zielbildes, Verwenden von übereinstimmenden Paaren der Vielzahl von Merkmalen des Referenzbildes und der Vielzahl von Merkmalen des Blickpunktumwandlungsbildes.

6. Verfahren nach Anspruch 5, wobei das Anzeigen des Bildes mit erweiterter Realität des Blickpunktumwandlungsbildes Folgendes umfasst:
Messen von mindestens einem Winkel und einem Abstand zwischen dem Referenzbild und dem Zielbild unter Verwendung der vorbestimmten übereinstimmenden Paare der Vielzahl von Merkmalen des Referenzbildes und der Vielzahl von Merkmalen des Zielbildes; und
Anzeigen eines Bildes mit erweiterter Realität des Referenzbildes des Ziels unter Verwendung des gemessenen Winkels und Abstands zwischen dem Referenzbild und dem Zielbild.

7. Verfahren nach Anspruch 1, das ferner Folgendes umfasst:
Auswählen eines Blickpunktumwandlungsbildes, das einem Fotografierwinkel unter einer Vielzahl von Blickpunktumwandlungsbildern entspricht; und
Bestimmen des ausgewählten Blickpunktumwandlungsbildes als Blickpunktumwandlungsbild, das für den Vergleich verwendet wird.

8. Verfahren nach Anspruch 7, wobei die Blickpunktumwandlungsbilder eine Vielzahl von Blickpunktumwandlungsbildern umfassen, deren Blickpunkte in Bezug auf ein Referenzbild des Ziels in unterschiedliche Winkel umgewandelt werden.

9. Verfahren nach Anspruch 7, wobei die Auswahl des Blickpunktumwandlungsbildes, das dem Fotografierwinkel unter den Blickpunktumwandlungsbildern entspricht, Folgendes umfasst:
Vergleichen des Fotografierwinkels der elektronischen Vorrichtung mit einem Schwellenwinkel;
wenn der Fotografierwinkel der elektronischen Vorrichtung größer als der Schwellenwinkel ist, Auswählen eines Blickpunktspunktumwandlungsbildes, das in einen anderen Winkel als 0 Grad unter den Vielzahl von Blickpunktsbildungsbildern umgewandelt wird; und
wenn der Fotografierwinkel der elektronischen Vorrichtung kleiner als der Schwellenwinkel ist, Auswählen eines Blickpunktspunktumwandlungsbildes, das in einen Winkel von 0 Grad unter den Vielzahl von Blickpunktsbildungsbildern umgewandelt wird.

10. Verfahren nach Anspruch 1, wobei die übereinstimmenden Paare durch eines von Folgendem bestimmt werden:
Extrahieren von Merkmalen, die in Bezug auf eine Skala und Rotation eines Bildes invariant sind, und
Berücksichtigen einer Umgebungsänderung einer Skala, einer Beleuchtung und eines Blickpunktspunktes und Extrahieren von Merkmalen, die in Bezug auf die Umgebungsänderung von einer Vielzahl von Bildern invariant sind.

11. Elektronische Vorrichtung (300) zum Anzeigen eines Bildes mit erweiterter Realität, wobei die Vorrichtung Folgendes umfasst:
mindestens einen Prozessor (322) zum Ausführen von Computerprogrammen;
einen Speicher (310) zum Speichern von Daten und Befehlen; und
mindestens ein Modul (311, 312, 313, 314, 315, 316, 317, 318, 319), das in dem Speicher gespeichert und dafür konfiguriert ist, von dem mindestens einen Prozessor ausgeführt zu werden,
wobei das mindestens eine Modul Anweisungen für Folgendes umfasst:
Erhalten eines Zielbildes eines Ziels,
Extrahieren einer Vielzahl von Merkmalen des Zielbildes,
Umwandeln eines Referenzbildes des Ziels, um ein Blickpunktumwandlungsbild zu erzeugen, indem ein Blickpunkt des Referenzbildes durch einen voreingestellten Winkel oder einen Benutzerpräferenzwinkel umgewandelt wird,
Extrahieren einer Vielzahl von Merkmalen des Blickpunktumwandlungsbildes,
Vergleichen des Zielbildes und des Blickpunktumwandlungsbildes, um übereinstimmende Paare der Vielzahl von Merkmalen des Zielbildes und der Vielzahl von Merkmalen des Blickpunktumwandlungsbildes zu bestimmen, und
Anzeigen eines Bildes mit erweiterter Realität des Blickpunktumwandlungsbildes basierend auf der ermittelten übereinstimmenden Paaren.

12. Vorrichtung nach Anspruch 11, wobei das mindestens eine Modul einen Befehl für Folgendes umfasst: Messen einer Differenz von Fotografierwinkeln des Zielbildes und des Blickpunktumwandlungsbildes, die bei der Bestimmung der übereinstimmenden Paare gemessen werden, Verwenden der gemessenen Fotografierwinkeldifferenz, um einen Fotografierwinkel zwischen dem Zielbild und dem Referenzbild zu bestimmen, Neigen des Bildes mit erweiterter Realität des Blickpunktumwandlungsbildes bis zum ermittelten Fotografierwinkel zwischen dem Zielbild und dem Referenzbild, und Anzeigen des geneigten Bildes mit erweiterter Realität.

13. Vorrichtung nach Anspruch 12, wobei das mindestens eine Modul eine Anweisung für Folgendes umfasst: Bestimmen eines Abstands zwischen dem Zielbild und dem Blickpunktumwandlungsbild, Verwenden des bestimmten Abstands, um einen Fotografierabstand zwischen dem Zielbild und dem Referenzbild zu bestimmen, Einstellen einer Größe des Bildes mit erweiterter Realität des Blickpunktumwandlungsbildes gemäß dem ermittelten Fotografierabstand zwischen dem Zielbild und dem Referenzbild, und Anzeigen des in der Größe angepassten Bildes mit erweiterter Realität.

14. Vorrichtung nach Anspruch 11, wobei das Zielbild von mindestens einer Kamera, einem Speicher oder einer externen Vorrichtung erfasst wird.

15. Vorrichtung nach Anspruch 11, wobei die Vorrichtung dafür ausgelegt ist, ein Verfahren nach einem der Ansprüche 5 bis 10 zu implementieren.

## Revendications

1. Un procédé d'affichage d'une image en réalité augmentée dans un dispositif électronique (300), le procédé comprenant :
l'acquisition (511, 611, 701, 811) d'une image cible d'une cible,
l'extraction (513, 613, 703, 813) d'une pluralité de caractéristiques de l'image cible,
la conversion d'une image de référence de la cible (601) de façon à générer une image de conversion de point de vue par la conversion (503) d'un point de vue de l'image de référence par un angle quelconque parmi un angle prédéfini et un angle de préférence d'utilisateur,
l'extraction (505) d'une pluralité de caractéristiques de l'image de conversion de point de vue,
la comparaison (401, 515) de l'image cible à l'image de conversion de point de vue de façon à déterminer des paires appariées de la pluralité de caractéristiques de l'image cible et de la pluralité de caractéristiques de l'image de conversion de point de vue, et
l'affichage (403) d'une image en réalité augmentée de l'image de conversion de point de vue en fonction des paires appariées déterminées.

2. Le procédé selon la Revendication 1, où l'affichage de l'image en réalité augmentée de l'image de conversion de point de vue comprend :
la mesure d'une différence d'angles de prise de vue de l'image cible et de l'image de conversion de point de vue, qui sont mesurés lors de la détermination des paires appariées,
l'utilisation de la différence d'angles de prise de vue mesurée de façon à déterminer un angle de prise de vue entre l'image cible et l'image de référence,
l'inclinaison de l'image en réalité augmentée de l'image de conversion de point de vue jusqu'à l'angle de prise de vue déterminé entre l'image cible et l'image de référence, et
l'affichage de l'image en réalité augmentée inclinée.

3. Le procédé selon la Revendication 2, comprenant en outre :
la détermination d'une distance entre l'image cible et l'image de conversion de point de vue, et
l'utilisation de la distance déterminée de façon à déterminer une distance de prise de vue entre l'image cible et l'image de référence,
où l'affichage de l'image en réalité augmentée de l'image de conversion de point de vue comprend en outre l'ajustement d'une taille de l'image en réalité augmentée de l'image de conversion de point de vue en fonction de la distance de prise de vue déterminée entre l'image cible et l'image de référence, et l'affichage de l'image en réalité augmentée ajustée en taille.

4. Le procédé selon la Revendication 1, où l'image cible est acquise par au moins un élément quelconque parmi un appareil de prise de vue, une mémoire et un dispositif externe.

5. Le procédé selon la Revendication 1, où la détermination de paires appariées de la pluralité de caractéristiques de l'image cible et de la pluralité de caractéristiques de l'image de conversion de point de vue comprend la détermination de paires appariées d'une pluralité de caractéristiques d'une image de référence antérieurement conservée en mémoire et de la pluralité de caractéristiques de l'image cible, l'utilisation de paires appariées de la pluralité de caractéristiques de l'image de référence et de la pluralité de caractéristiques de l'image de conversion de point de vue.

6. Le procédé selon la Revendication 5, où l'affichage de l'image en réalité augmentée de l'image de conversion de point de vue comprend :
la mesure d'au moins un élément parmi un angle et une distance entre l'image de référence et l'image cible au moyen des paires appariées déterminées de la pluralité de caractéristiques de l'image de référence et de la pluralité de caractéristiques de l'image cible, et
l'affichage d'une image en réalité augmentée de l'image de référence de la cible au moyen de l'angle et de la distance mesurés entre l'image de référence et l'image cible.

7. Le procédé selon la Revendication 1, comprenant en outre :
la sélection d'une image de conversion de point de vue correspondant à un angle de prise de vue parmi une pluralité d'images de conversion de point de vue, et
la détermination de l'image de conversion de point de vue sélectionnée en tant qu'image de conversion de point de vue utilisée pour la comparaison.

8. Le procédé selon la Revendication 7, où les images de conversion de point de vue comprennent une pluralité d'images de conversion de point de vue dont les points de vue sont convertis en différents angles par rapport à une image de référence de la cible.

9. Le procédé selon la Revendication 7, où la sélection de l'image de conversion de point de vue correspondant à l'angle de prise de vue parmi les images de conversion de point de vue comprend :
la comparaison de l'angle de prise de vue du dispositif électronique à un angle seuil,
lorsque l'angle de prise de vue du dispositif électronique est supérieur à l'angle seuil, la sélection d'une image de conversion de point de vue convertie en un angle autre que 0 degré parmi la pluralité d'images de conversion de point de vue, et
lorsque l'angle de prise de vue du dispositif électronique est inférieur à l'angle seuil, la sélection d'une image de conversion de point de vue convertie en un angle de 0 degré parmi la pluralité d'images de conversion de point de vue.

10. Le procédé selon la Revendication 1, où les paires appariées sont déterminées par l'intermédiaire d'une opération parmi :
l'extraction de caractéristiques invariantes vis-à-vis d'une échelle et d'une rotation d'une image, et
la prise en compte d'une modification d'environnement d'une échelle, d'un éclairage et d'un point de vue et l'extraction de caractéristiques invariantes vis-à-vis de la modification d'environnement d'une pluralité d'images.

11. Un dispositif électronique (300) destiné à l'affichage d'une image en réalité augmentée, le dispositif comprenant :
au moins un processeur (322) destiné à l'exécution de programmes informatiques,
une mémoire (310) destinée à la conservation en mémoire de données et d'instructions, et
au moins un module (311, 312, 313, 314, 315, 316, 317, 318, 319) conservé en mémoire dans la mémoire et configuré de façon à être exécuté par le au moins un processeur,
où le au moins un module comprend des instructions destinées à
l'acquisition d'une image cible d'une cible,
l'extraction d'une pluralité de caractéristiques de l'image cible,
la conversion d'une image de référence de la cible de façon à générer une image de conversion de point de vue par la conversion d'un point de vue de l'image de référence par un angle quelconque parmi un angle prédéfini et un angle de préférence d'utilisateur,
l'extraction d'une pluralité de caractéristiques de l'image de conversion de point de vue,
la comparaison de l'image cible et de l'image de conversion de point de vue de façon à déterminer des paires appariées de la pluralité de caractéristiques de l'image cible et de la pluralité de caractéristiques de l'image de conversion de point de vue et,
l'affichage d'une image en réalité augmentée de l'image de conversion de point de vue en fonction des paires appariées déterminées.

12. Le dispositif selon la Revendication 11, où le au moins un module comprend une instruction destinée à la mesure d'une différence d'angles de prise de vue de l'image cible et de l'image de conversion de point de vue, qui sont mesurés lors de la détermination des paires appariées, à l'utilisation de la différence d'angles de prise de vue mesurée de façon à déterminer un angle de prise de vue entre l'image cible et l'image de référence, à l'inclinaison de l'image en réalité augmentée de l'image de conversion de point de vue jusqu'à l'angle de prise de vue déterminé entre l'image cible et l'image de référence, et à l'affichage de l'image en réalité augmentée inclinée.

13. Le dispositif selon la Revendication 12, où le au moins un module comprend une instruction destinée à la détermination d'une distance entre l'image cible et l'image de conversion de point de vue, à l'utilisation de la distance déterminée de façon à déterminer une distance de prise de vue entre l'image cible et l'image de référence, à l'ajustement d'une taille de l'image en réalité augmentée de l'image de conversion de point de vue en fonction de la distance de prise de vue déterminée entre l'image cible et l'image de référence, et à l'affichage de l'image en réalité augmentée ajustée en taille.

14. Le dispositif selon la Revendication 11, où l'image cible est acquise par au moins un élément quelconque parmi un appareil de prise de vue, une mémoire et un dispositif externe.

15. L'appareil selon la Revendication 11, où l'appareil est agencé de façon à mettre en oeuvre un procédé selon l'une quelconque des Revendications 5 à 10.
